# EUROPÄISCHE PATENTSCHRIFT

(11) **EP 0 622 105 B1**
(45) Veröffentlichungstag und Bekanntmachung des Hinweises auf die Patenterteilung: **14.08.1996**
(21) Anmeldenummer: 94106548.4
(22) Anmeldetag: 27.04.1994
(51) Int. Cl.: B01D 46/24, B01D 29/11, B01D 29/52

(54) **Filterkörperanordnung**
Filter bodies arrangement
Arrangement de corps filtrants

(30) Priorität: 30.04.1993 DE 9306582 U
(43) Veröffentlichungstag der Anmeldung: 02.11.1994
(73) Patentinhaber: JUNKER-FILTER GmbH, D-74889 Sinsheim (DE)
(72) Erfinder: Junker, Jürgen, D-74589 Sinsheim (DE)
(74) Vertreter: Ostertag, Reinhard

(56) Entgegenhaltungen:
- CH-A- 596 872
- DE-A- 3 149 714

## Beschreibung

Die Erfindung betrifft eine Filterkörperanordnung gemäß dem Oberbegriff des Anspruches 1.

Eine derartige Filterkörperanordnung ist im DE-GM 91 11 939 beschrieben. Bei ihr sind die einzelnen Filterkörper getrennt am Tragelement befestigt, wobei die Befestigung darüber hinaus mechanisch aufwendig ist.

In der DE-A-31 49 714 ist ferner eine Filterkörperanordnung beschrieben, bei welcher eine Mehrzahl von Filterkerzen einzeln mechanisch an einer starren Tragplatte aufgehängt sind. Die starre Tragplatte ist ihrerseits über Federn an einem Filtergehäuse gelagert.

Die CH-A-596 872 offenbart eine Filterkörperanordnung, bei welcher einzelne taschenförmige Filterelemente an ihrem oberen Ende an Öffnungen einer starren Tragplatte aus Kunststoff festgeklebt sind.

Durch die vorliegende Erfindung soll eine Filterkörperanordnung geschaffen werden, die einfach herzustellen ist, als ein Stück handhabbar ist und ein gutes Schwingen der Filterkörper gewährleistet, wie dies im Hinblick auf ein Abschütteln des Filterkuchens gewünscht wird.

Diese Aufgabe ist erfindungsgemäß gelöst durch eine Filterkörperanordnung gemäß Anspruch 1.

Bei der erfindungsgemäßen Filterkörperanordnung können die einzelnen Filterkörper auf Grund der Biegbarkeit des Tragelementes unter Vekippung ihres oberen Endes leicht und abrupt in Schwingung versetzt werden, z.B. durch Anströmen ihrer Außenseite, durch Beaufschlagung ihrer Innenseite mit einem Druckstoß oder durch mechanisches Rütteln.

Vorteilhafte Weiterbildungen der Erfindung sind in Unteransprüchen angegeben.

Die Weiterbildung der Erfindung gemäß Anspruch 2 ist im Hinblick auf eine weiter verbesserte Beweglichkeit der Filterkörper von Vorteil.

Bei einer Filterkörperanordnung gemäß Anspruch 3 gibt das Tragelement einen Beitrag zur Gesamtfilterfläche.

Dabei ist es im Hinblick auf geringe Kosten, hohe Flexibilität und konstante Porengröße von Vorteil, wenn das Tragelement gemäß Anspruch 4 aus einem Gewebe besteht.

Die Weiterbildung der Erfindung gemäß Anspruch 5 ist im Hinblick auf eine einfache, zuverlässige und leckfreie Befestigung der oberen Enden der Filterkörper am Tragelement von Vorteil.

Dabei wird bei der Weiterbildung gemäß Anspruch 6 erreicht, daß die Dichtschicht die Flexibilität des Tragelementes nur in geringem Umfange herabsetzt.

Bei einer Filterkörperanordnung gemäß Anspruch 7 hat man auch in den von der Dichtschicht bedeckten Bereichen des Tragelementes eine Filterwirkung.

Bei einer flächig aufgebrachten Dichtschicht werden in den Ansprüchen 8 und 9 Maßnahmen vorgeschlagen, durch welche ein weitgehend unbehindertes Verkippen des oberen Endes der Filterkörper und gleichzeitig eine sichere dichte Verbindung zwischen dem oberen Ende der Filterkörper und dem Tragelement gewährleistet ist.

Die Weiterbildung der Erfindung gemäß Anspruch 10 ist im Hinblick auf ein einfaches und preisgünstiges Herstellen der Wanddichtung von Vorteil, ebenso die Weiterbildung der Erfindung gemäß Anspruch 11.

Bei einer Filterkörperanordnung gemäß Anspruch 12 ist der Hauptabschnitt des Tragelementes in eingebautem Zustand nicht straff gespannt, was eine besonders gute Verkippbarkeit der Filterkörper gewährleistet.

Eine Filterkörperanordnung gemäß Anspruch 13 kann besonders effektiv einen Filterkuchen abschütteln, da das Rüttelteil mit der bei der Hubmitte vorliegenden maximalen Bahngeschwindigkeit auf die Filterkörper auftrifft und diese so abrupt in Bewegung versetzt.

Nachstehend wird die Erfindung anhand von Ausführungsbeispielen unter Bezugnahme auf die Zeichnung näher erläutert. In dieser zeigen:
- Figur 1:: eine Aufsicht auf die Reinseite einer Hälfte eines Taschenfiltereinsatzes, wobei in der oberen und unteren Hälfte der Figur zwei verschiedene Ausführungsbeispiele gezeigt sind;
- Figur 2:: einen vertikalen Längsschnitt durch ein Taschenfilter längs der Schnittebene II-II von Figur 1;
- Figur 3:: einen transversalen Schnitt durch den Randabschnitt eines abgewandelten Taschenfiltereinsatzes;
- Figur 4:: einen transversalen Schnitt durch den Randbereich eines nochmals abgewandelten Taschenfiltereinsatzes; und
- Figur 5:: einen ähnlichen Schnitt wie Figur 2, in welchem jedoch eine abgewawndeltes Taschenfilter gezeigt ist.

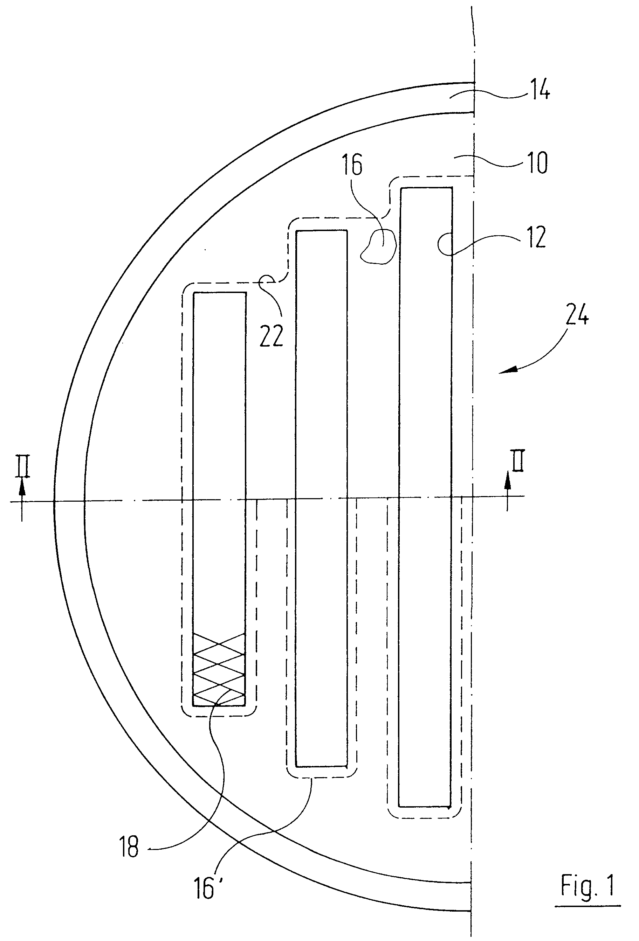

In Figur 1 ist mit 10 ein scheibenförmiges Filterkörper-Tragelement bezeichnet, welches aus einem Filtertuchmaterial hergestellt ist.

In dem kreisförmigen Filtertuchstück sind mehrere Fenster 12 ausgeschnitten, die die Form gestreckter Rechtecke haben. Dabei verlaufen die Fensterachsen parallel zueinander und die Längen der Fenster 12 sind so abgestuft, daß die Fensteröffnungen einen vorgegebenen Mindestabstand vom Rand des Tragelementes 10 haben.

Am Rand ist an das Tragelement 10 eine ringförmige, in Figur 1 von der Zeichenebene nach oben ragende Randdichtung 14 angeformt. Diese besteht in der Praxis aus einem weichen Polyurethanmaterial mit einer Shore-A-Härte im Bereich von 50-60.

Aus demselben PUR-Material ist an die Unterseite des Tragelementes 10 eine Dichtschicht 16 angeformt, in welche zugleich die oberen Enden von Filterkörpern 18 eingebettet sind. Letztere bestehen aus einem eigensteifen porösen Filtermaterial und haben beim dargestellten Ausführungsbeispiel im wesentlichen rautenförmigen Querschnitt. Stattdessen können aber auch Filterkörper mit ovalem Querschnitt verwendet werden oder Filterkörperplatten, die aus harmonikaähnlich gefalteten Wandteilen bestehen.

Die unteren Enden der Filterkörper 18 sind am unteren Ende durch Stirnplatten 20 verschlossen, die ebenso wie die Dichtschicht 16 aus dem auch für die Randdichtung 14 verwendeten PUR-Material bestehen. Die Stirnplatten 20 werden in situ auf den unteren Enden der Filterkörper 18 geformt.

Wie aus Figur 1 ersichtlich, verläuft der Rand 22 der Dichtschicht 16 unter kleinem Abstand außerhalb der Fenster 12, so daß man zwischen dem Rand 22 der Dichtschicht 16 und der radial innenliegenden Kante der Randdichtung 14 noch eine Ringfläche an nicht beschichtetem Gewebe erhält. Diese Gewebeabschnitte fördern die Verkippbarkeit der Filterkörper 18 und stellen zugleich eine zusätzliche Filterfläche dar.

Im Hinblick darauf, eine gute Verkippbarkeit der Filterkörper 18 zu gewährleisten, hat auch die Dichtschicht 16 nur gerade diejenige Dicke, die im Hinblick auf ein dichtes Verbinden der oberen Enden der Filterkörper 18 mit dem Gewebe des Tragelementes 10 unbedingt notwendig ist. Hierzu sind auch die oberen Enden der Filterkörper, die aus einem eigensteifen Filtermaterial hergestellt sind, exakt plan und senkrecht zur Filterkörperachse abgeschnitten.

Um ein noch besseres Verkippen der Filterkörper 18 zu ermöglichen, kann man - wie in der unteren Hälfte von Figur 1 dargestellt, die Dichtschicht aus mehreren diskreten schmalen Dichtrahmen 16' zusammensetzen, von denen jeder jeweils eines der Fenster 12 umgibt.

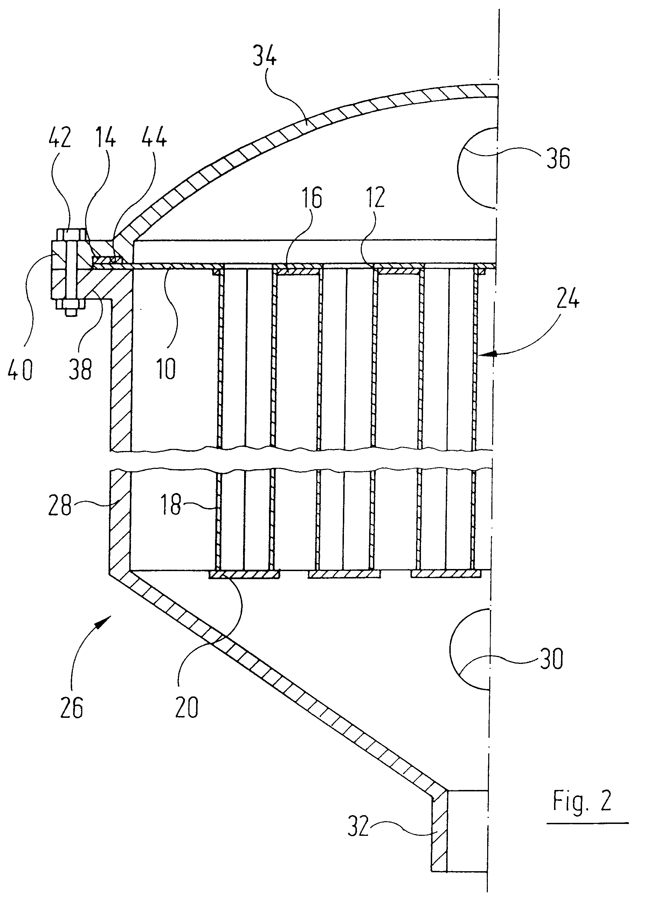

Figur 2 zeigt den oben beschriebenen, insgesamt mit 25 bezeichneten Taschenfiltereinsatz eingebaut in ein Taschenfiltergehäuse 26. Dieses hat ein unteres Gehäuseteil 28 mit einem Einlaßstutzen 30, über welchem Feststoffpartikel enthaltende Luft zugeführt wird, sowie mit einem Entleerungsstutzen 32, über welchen die abgeschiedenen Feststoffpartikel in Abständen abgezogen werden.

Ein oberes Gehäuseteil 34 hat einen Auslaßstutzen 36, über den die von Feststoffpartikeln befreite Luft abgeführt wird.

Die beiden Gehäuseteile 28 und 34 haben Schließflansche 38, 40, an denen sie mittels Schrauben 42 verbunden werden. Die Unterseite des Schließflansches 40 ist mit einer Ringnut 44 versehen, in welcher die Randdichtung 14 des Taschenfiltereinsatzes 24 Aufnahme findet. Auf diese Weise ist der Taschenfiltereinsatz 24 zwischen die beiden Gehäuseteile 28 und 34 eingespannt, und die Filterkörper 18 hängen zu pendelnden Bewegungen befähigt am aus Filtertuchmaterial gefertigten Tragelement 10.

Zum Abschütteln der sich auf der Außenseite der Filterkörper 18 ansammelnden Filterkuchen wird der Auslaßstutzen 36 mit einem oder mehreren Druckstößen beaufschlagt, wodurch einerseits das Filtermaterial der Filterkörper 18 von der Reinseite zur Schmutzseite hin durchgespült wird, zugleich aber auch die Filterkörper 18 in pendelnde Bewegung versetzt werden, was ein Ablösen der Filterkuchen begünstigt. Die abgelösten Filterkuchen rutschen dann nach unten zum Entleerungsstutzen 32.

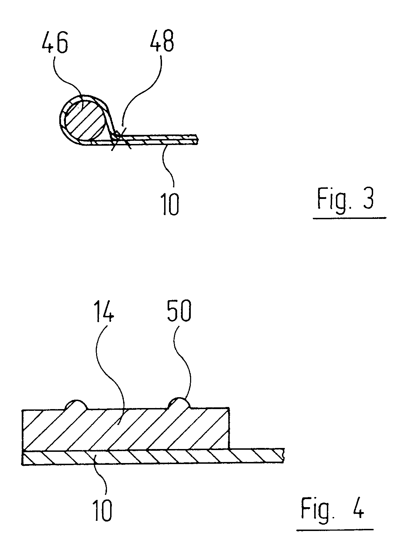

Figur 3 zeigt eine abgewandelte Randdichtung. Ein Rundschnur-Dichtring 46 ist in den Randabschnitt des aus Filtertuch hergestellten Tragelementes 10 eingenäht. Die Naht ist durch ein Kreuz 48 angedeutet.

Wie aus Figur 4 ersichtlich, kann man die Randdichtung 14 auf ihrer freien Stirnfläche mit axial vorspringenden Dichtrippen 50 versehen.

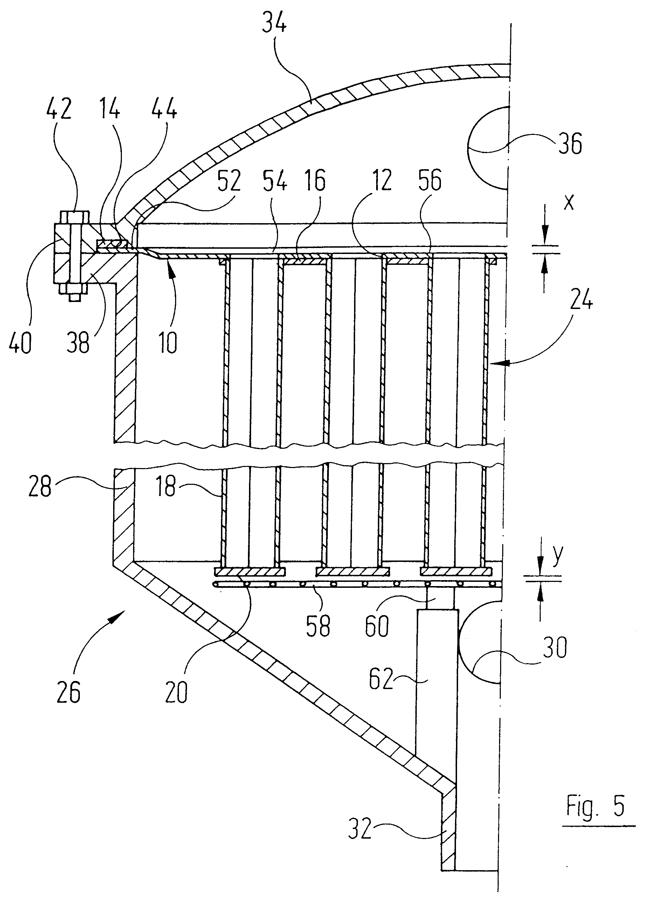

Beim Ausführungsbeispiel nach Figur 5 hat das Tragelement 10 tellerähnliche Gestalt, die zum Beispiel durch Pressen oder Tiefziehen eines ebenen Ausgangsmateriales erhalten worden ist. Ein ebener Randabschnitt 52 trägt über einen flachkegeligen Übergangsabschnitt 54 einen im wesentlichen ebenen Hauptabschnitt 56, der in der Praxis unter dem Gewicht der Filterkörper 18 etwas durchhängt. Auf diese Weise können die Filterkörper 18 im wesentlichen frei verkippen und sich etwas in axialer Richtung bewegen. Der Abstand der Ebenen des Randabschnittes 52 und des Hauptabschnittes 56 ist mit "x" bezeichnet.

Um eine Strecke "y", die etwas kleiner ist als die Strecke "x", unterhalb der Stirnplatten 20 steht in seiner Ruhestellung ein Rüttelgitter 58 mit großer Maschenweite, durch welches von den Filterkörpern 18 abgeschüttelte Feststoffe frei hindurchfallen. Das Rüttelgitter 58 sitzt auf dem Abtriebsteil 60 eines Vibrators 62, dessen Arbeitshub das Doppelte der Strecke "y" beträgt. Das Rüttelgitter 58 trifft also bei laufendem Vibrator 62 mit seiner maximalen, bei der Hubmitte erreichten Geschwindigkeit auf, so daß die Filterkörper 18 abrupt in Bewegung versetzt werden.

Wie aus der obenstehenden Beschreibung ersichtlich, wird durch die Erfindung eine Filterkörperanordnung geschaffen, die sich durch folgende Eigenschaften auszeichnet:

Auf kleiner Fläche ist eine große Anzahl von Filterkörpern untergebracht, so daß man eine sehr hohe effektive Filterfläche hat. Da das Tragelement 10 seinerseits aus Filtertuchmaterial gefertigt ist, trägt es ebenfalls zur Gesamtfilterfläche bei.

Da die Filterkörper 18 schwingend aufgehängt sind und durch Gasbeaufschlagung in Schwingung versetzbar sind, werden die Druckverluste beim Abreinigen verringert, wodurch sich eine Erhöhung der Standzeit ergibt.

Alle verwendeten Materialien sind homogen (Trägerelement, Filterkörper, Dichtungen und Dichtschicht), so daß man nur eine kleine Anzahl von Dichtstellen hat, welche im übrigen durch Anbringen des Dichtmateriales in situ gut beherrschbar sind.

In demjenigen Abschnitt der Filterkörperanordnung, der nach Einbau in ein Filtergehäuse noch freiliegt, sind keine genähten Nähte vorhanden. Soweit Dichtverbindungen nicht durch Gießen bzw. Anbringen von Dichtmaterial in situ hergestellt sind, können sie auch in Schweißtechnik erfolgen, z.B. kann das untere Ende der Filterkörper 18 dann, wenn deren Filtermaterial schweißbar ist, auch einfach durch Zusammenquetschen und Verschweißen des unteren Rohrendes verschlossen werden.

Die oben beschriebene Filterkörperanordnung stelle ein einziges zusammenhängendes Bauteil dar, welches sich somit einfach und kostengünstig in einem Filtergehäuse anbringen oder aus diesem ausbauen läßt. Die einzelnen Filterkörper brauchen vor Ort nicht separat gehandhabt zu werden.

Darüber hinaus sind Kosten für mechanische Abreinigungssysteme vermindert, die auch in Verbindung mit der oben beschriebenen Filterkörperanordnung verwendbar sind. Auf Grund der pendelnden Anordnung der einzelnen Filterkörper 18 am Tragelement 10 braucht man für ein mechanisches Schütteln der Filterkörper nur geringe Leistung.

Das oben beschriebene Konzept für eine Filterkörperanordnung ist offensichtlich nicht auf eine Kreisform des Tragelementes beschränkt. Man kann auch Tragelemente mit anderer Randgeometrie verwenden, z.B. rechteckige Tragelemente oder an spezielle Filtergehäusequerschnitte anpasste Tragelemente.

Der oben beschriebene Aufbau der Filterkörperanordnung läßt sich auch gleichermaßen für ein breites Spektrum textiler Filtermedienwerkstoffe verwenden, darunter auch leitfähige und nicht brennbare.

Die für die Herstellung der Filterkörperanordnung benötigten Werkzeuge sind einfach; die Herstellung erfolgt auch mit minimalem Materialaufwand.

Filterkörperanordnungen, wie sie obenstehend beschrieben wurden, eignen sich insbesondere für Filter zum Abscheiden von Feststoffpartikeln aus Luft, insbesondere Industriestaubsauger, Entstaubungsanlagen für Arbeitsplätze in holzverarbeitenden Betrieben, metallverarbeitenden Betrieben, Gießereien, in der chemischen Industrie und in der Lebensmittelindustrie. Weitere Anwendungen sind Filtereinheiten, die direkt in Bearbeitungszentren mit Anfall von Festkörperpartikeln integriert sind.

## Patentansprüche

1. Filterkörperanordnung mit einer Vielzahl gestreckter Filterkörper (18), welche an einem ersten Ende offen und an einem zweiten Ende geschlossen (20) sind und aus einem Filtermaterial hergestellt sind, und mit einem Tragelement (10), in welchem Fenster vorgesehen sind, welche die oberen Enden der Filterkörper überdecken und an welchem die ersten Enden der Filterkörper (18) befestigt sind und welches seinerseits am Rande eine Randdichtung (14) aufweist, mittels der sein Rand dicht an einem Filtergehäuse (26) befestigbar ist, dadurch gekennzeichnet, daß das Tragelement (10) aus biegbarem Material besteht, so daß ein Schwingen der Filterkörper, im Hinblick auf ein Abschütteln des Filterkuchens, gewährleistet ist.

2. Filterkörperanordnung nach Anspruch 1, dadurch gekennzeichnet, daß das Material des Tragelementes (10) flexibel ist.

3. Filterkörperanordnung nach Anspruch 1 oder 2, dadurch gekennzeichnet, daß das Material des Tragelementes (10) porös ist, wobei die Porengröße dieses Materiales kleiner oder gleich der Porengröße des Filtermateriales ist.

4. Filterkörperanordnung nach Anspruch 3, dadurch gekennzeichnet, daß das Material des Tragelementes (10) ein textiler Filtermedienwerkstoff, insbesondere ein Filtergewebe ist.

5. Filterkörperanordnung nach einem der Ansprüche 1-4, dadurch gekennzeichnet, daß die Filterkörper (18) in eine von der Unterseite des Tragelementes (10) getragene Dichtschicht (16) eingebettet sind.

6. Filterkörperanordnung nach Anspruch 5, dadurch gekennzeichnet, daß die Dichtschicht den Fenstern (12) zugeordnete Dichtrahmen (16') aufweist.

7. Filterkörperanordnung nach Anspruch 5 oder 6, dadurch gekennzeichnet, daß die Dichtschicht (16) aus porösem Material besteht, wobei vorzugsweise die Porengröße dieses Materiales kleiner oder gleich der Porengröße des Filtermateriales ist.

8. Filterkörperanordnung nach einem der Ansprüche 5-7, dadurch gekennzeichnet, daß das Material der Dichtschicht (16) weich ist.

9. Filterkörperanordnung nach einem der Ansprüche 5-8, dadurch gekennzeichnet, daß die Dichtschicht (16) dünn ist, die Filterkörper (18) aus eigensteifem Filtermaterial gefertigt sind und die Randabschnitte ihres oberen Endes in einer gemeinsamen Ebene liegen.

10. Filterkörperanordnung nach einem der Ansprüche 1-9, dadurch gekennzeichnet, daß die Randdichtung (14) durch an den Rand des Tragelementes (10) angeformtes Dichtmaterial gebildet ist.

11. Filterkörperanordnung nach einem der Ansprüche 1-9, dadurch gekennzeichnet, daß die Randdichtung (14) einen in einen Randabschnitt des Tragelementes (10) eingenähten oder an letzteren angehefteten Dichtring (46) aufweist.

12. Filterkörperanordnung nach einem der Ansprüche 1-11, dadurch gekennzeichnet, daß ein Randabschnitt (52) des Tragelementes (10) und ein Hauptabschnitt (56) des Tragelementes (10) in im wesentlichen parallel zueinander versetzten Ebenen liegen.

13. Filterkörperanordnung nach Anspruch 12, dadurch gekennzeichnet, daß ein auf die Filterkörper (18) arbeitendes Rüttelteil (58) in seiner unteren Endstellung um etwa seinen halben Arbeitshub (y) von den Filterkörpern (18) beabstandet ist und sein halber Arbeitshub (y) etwas kleiner ist als der Abstand (x) zwischen den zueinander versetzten Ebenen.

## Claims

1. Filter body arrangement having a multiplicity of elongated filter bodies (18) which are open at a first end and closed at a second end (20) and are manufactured from a filter material, and having a carrying element (10) to which the first ends of the filter bodies (18) are attached and which, for its part, has at the rim a rim seal (14) by means of which its rim can be attached in a sealed manner to a filter casing (26), characterized in that the carrying element (10) consists of pliable material in which windows (12) covering the upper ends of the filter bodies (18) are provided.

2. Filter body arrangement according to claim 1, characterized in that the material of the carrying element (10) is flexible.

3. Filter body arrangement according to claim 1 or 2, characterized in that the material of the carrying element (10) is porous, the pore size of the said material being smaller than, or the same as, the pore size of the filter material.

4. Filter body arrangement according to claim 3, characterized in that the material of the carrying element (10) is a textile filter media material, in particular a woven filter fabric.

5. Filter body arrangement according to one of claims 1 to 4, characterized in that the filter bodies (18) are embedded in a sealing layer (16) carried by the underside of the carrying element (10).

6. Filter body arrangement according to claim 5, characterized in that the sealing layer has sealing frames (16') associated with the windows (12).

7. Filter body arrangement according to claim 5 or 6, characterized in that the sealing layer (16) consists of porous material, the pore size of the said material preferably being smaller than, or the same as, the pore size of the filter material.

8. Filter body arrangement according to one of claims 5 to 7, characterized in that the material of the sealing layer (16) is soft.

9. Filter body arrangement according to one of claims 5 to 8, characterized in that the sealing layer (16) is thin, the filter bodies (18) are made from inherently rigid filter material and the rim sections of their upper end lie in a common plane.

10. Filter body arrangement according to one of claims 1 to 9, characterized in that the rim seal (14) is constituted by sealing material formed onto the rim of the carrying element (10).

11. Filter body arrangement according to one of claims 1 to 9, characterized in that the rim seal (14) has a sealing ring (46) sewn into, or fastened onto, a rim section of the carrying element (10).

12. Filter body arrangement according to one of claims 1 to 11, characterized in that a rim section (52) of the carrying element (10) and a main section (56) of the said carrying element (10) lie in planes which are mutually offset in an essentially parallel manner.

13. Filter body arrangement according to claim 12, characterized in that a jolting part (58) working on the filter bodies (18) is distant, in its lower end position, from the filter bodies (18) by about half (y) of its working stroke, and half (y) of its working stroke is slightly smaller than the distance (x) between the mutually offset planes.

## Revendications

1. Dispositif de corps filtrants, comportant une multiplicité de corps (18) filtrants oblongs, dont une première extrémité est ouverte et une deuxième fermée (20) et qui sont fabriqués en un matériau filtrant, et comportant un élément (10) de support dans lequel sont prévues des fenêtres (12) qui recouvrent les extrémités supérieures des corps (18) filtrants, auquel les premières extrémités des corps (18) filtrants sont fixés et qui, pour sa part, comporte sur le bord un dispositif (14) d'étanchéité marginale, au moyen duquel son bord peut être fixé de manière étanche à un boîtier (26) de filtre, caractérisé en ce que l'élément (10) de support est en un matériau souple, si bien qu'une bonne oscillation des corps filtrants est assurée, comme cela est souhaité pour secouer les corps filtrants.

2. Dispositif de corps filtrants suivant la revendication 1, caractérisé en ce que le matériau de l'élément (10) de support est flexible.

3. Dispositif de corps filtrants suivant la revendication 1 ou 2, caractérisé en ce que le matériau de l'élément (10) de support est poreux, la dimension des pores de ce matériau étant plus petite ou égale à la dimension des pores du matériau filtrant.

4. Dispositif de corps filtrants suivant la revendication 3, caractérisé en ce que le matériau de l'élément (10) de support est un matériau textile d'agent filtrant, notamment un tissu filtrant.

5. Dispositif de corps filtrants suivant les revendications 1 à 4, caractérisé en ce que les corps (18) filtrants sont enrobés dans une couche (16) étanche portée par la face inférieure de l'élément (10) de support.

6. Dispositif de corps filtrants suivant la revendication 5, caractérisé en ce que la couche étanche comporte des cadres (16') étanches associés aux fenêtres (12).

7. Dispositif de corps filtrants suivant la revendication 5 ou 6, caractérisé en ce que la couche (16) étanche est en un matériau poreux, la dimension des pores de ce matériau étant de préférence inférieure ou égale à la dimension des pores du matériau filtrant.

8. Dispositif de corps filtrants suivant l'une des revendications 5 à 7, caractérisé en ce que le matériau de la couche (16) étanche est mou.

9. Dispositif de corps filtrants suivant l'une des revendications 5 à 8, caractérisé en ce que la couche (16) étanche est mince, en ce que les corps (18) filtrants sont fabriqués en un matériau filtrant à rigidité propre et en ce que les parties marginales de leur extrémité supérieure sont dans un plan commun.

10. Dispositif de corps filtrants suivant l'une des revendications 1 à 9, caractérisé en ce que le dispositif (14) d'étanchéité marginal est formé par un matériau étanche issu du bord de l'élément (10) de support.

11. Dispositif de corps filtrants suivant l'une des revendications 1 à 9, caractérisé en ce que le dispositif (14) d'étanchéité marginal comporte un anneau (46) d'étanchéité cousu dans une partie marginale de l'élément (10) de support ou attaché à ce dernier.

12. Dispositif de corps filtrants suivant l'une des revendications 1 à 11, caractérisé en ce qu'une partie (52) marginale de l'élément (10) de support et une partie (56) principale de l'élément (10) de support sont dans des plans décalés sensiblement parallèlement l'un par rapport à l'autre.

13. Dispositif de corps filtrants suivant la revendication 12, caractérisé en ce qu'une pièce (58) agitatrice fonctionnant sur les corps (18) filtrants est, en sa position inférieure d'extrémité, à une distance correspondant environ à la moitié de sa course (y) opératoire des corps (18) filtrants et en ce que sa moitié de course (y) opératoire est un peu plus petite que la distance (x) comprise entre les plans décalés l'un par rapport à l'autre.
